Europäisches Patentamt

European Patent Office

Office européen des brevets

(19)

(11) Veröffentlichungsnummer: **0 082 960**

**A2**

(12) # EUROPÄISCHE PATENTANMELDUNG

(21) Anmeldenummer: **82110845.3**

(22) Anmeldetag: **24.11.82**

(51) Int. Cl.³: **G 02 B 7/26**

(30) Priorität: **28.12.81 DE 3151577**

(43) Veröffentlichungstag der Anmeldung:
**06.07.83 Patentblatt 83/27**

(84) Benannte Vertragsstaaten:
**BE DE FR GB IT NL**

(71) Anmelder: **AEG - TELEFUNKEN Nachrichtentechnik GmbH**
**Gerberstrasse 33**
**D-7150 Backnang(DE)**

(72) Erfinder: **Barth, Dieter**
**Staige 43**
**D-7155 Oppenweiler(DE)**

(74) Vertreter: **Schickle, Gerhard, Dipl.-Ing. et al,**
**AEG-TELEFUNKEN Nachrichtentechnik GmbH K1 E7**
**Gerberstrasse 33**
**D-7150 Backnang(DE)**

(54) **Hülse zur Aufnahme von Lichtwellenleiterspleissen.**

(57) Die vorliegende Erfindung betrifft eine Hülse zur Aufnahme der Spleißstelle(n) zweier Lichtwellenleiterkabel mit beliebigen Durchmessern. Der Mittelteil der Hülse dient als Hohlraum zur Aufnahme der Spleißstellen und die Hülsenenden, die auf die Kabel aufgepreßt werden, sind mit ihren Innendurchmessern an die jeweiligen Kabel angepaßt.

FIG.1

EP 0 082 960 A2

- 1 -

AEG-TELEFUNKEN Nachrichtentechnik GmbH      PTL-BK/Th/ma
Gerberstr. 33                               BK 81/139
D-7150 Backnang

Hülse zur Aufnahme von Lichtwellenleiterspleißen

Die vorliegende Erfindung betrifft eine Hülse zur Aufnahme der Spleißstelle(n) zweier Lichtwellenleiterkabel,
wobei die Hülse auf den beiden Kabelenden aufgequetscht
ist.

Eine derartige Hülse ist aus der DE-OS 30 11 429 bekannt.
Sie dient als Schutzhülle für die Spleißstellen der Lichtwellenleiter und verbindet gleichzeitig die beiden Kabel
zugfest miteinander. Die hier beschriebene Hülse ist vorgesehen für die Verbindung zweier Lichtwellenleiterkabel
mit gleichen Durchmessern.

Der Erfindung liegt nun die Aufgabe zugrunde, eine Hülse
der eingangs genannten Art anzugeben, die geeignet ist,
Lichtwellenleiterkabel mit unterschiedlichen Durchmessern
miteinander zu verbinden.

Die Aufgabe wird erfindungsgemäß dadurch gelöst, daß der
die Spleißstelle(n) aufnehmende Hohlraum der Hülse an den
quetschbaren Hülsenenden auf Innendurchmesser übergeht,
die an die jeweiligen Kabeldurchmesser angepaßt sind.

Eine zweckmäßige Ausführung der Erfindung geht aus dem Unteranspruch hervor.

Vorteile der erfindungsgemäßen Hülse bestehen darin, daß sie sehr leicht herstellbar ist und daß mit ihr bei sehr geringem Montageaufwand eine Verbindung zwischen zwei Lichtwellenleiterkabeln beliebigen Aufbaus hergestellt werden kann, wobei die Spleißstellen optimal gegen jede mechanische Beanspruchung geschützt sind.

Anhand von in der Zeichnung dargestellten Ausführungsbeispielen wird nachfolgend die Erfindung näher erläutert.

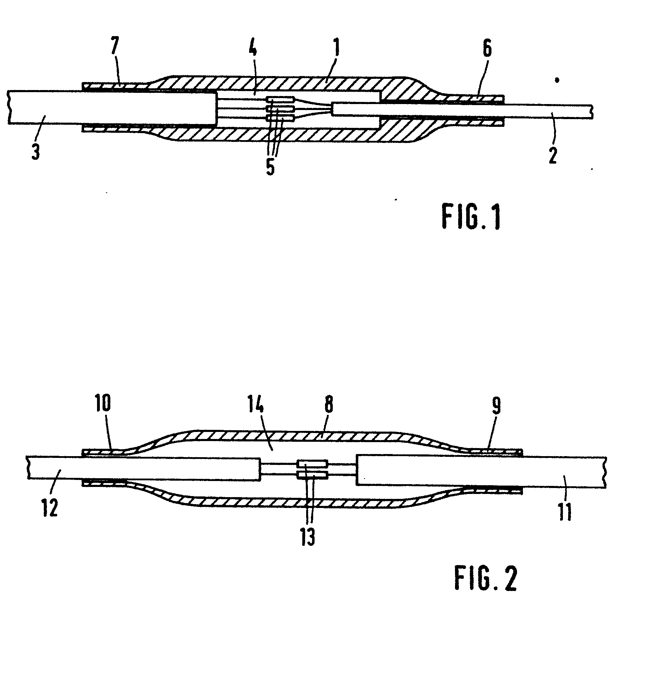

Die Figuren 1 und 2 zeigen zwei verschiedene Formen der Hülse. Es sind aber auch andere von diesen abweichende Gestaltungsvarianten der Hülse möglich.

Die in der Fig. 1 dargestelle Hülse 1 ist von beiden Seiten mit einer Längsbohrung versehen, die jeweils an den Durchmesser des Kabels 2 bzw. 3 angepaßt ist.

Die Längsbohrung für das Kabel 3 mit dem größeren Durchmesser durchsetzt die Hülse 1 soweit, daß diese Bohrung einen genügend großen Hohlraum 4 bietet für die Unterbringung der Lichtwellenleiterspleißstellen 5. An den Enden 6 und 7 ist die in ihrem Mittelteil stabile Hülse z.B. durch Abdrehen auf eine Wandstärke gebracht, die es erlaubt, die Hülsenendbereiche auf den Kabeln 2 und 3 aufzuquetschen.

Eine andere Hülsenform zeigt die Fig. 2.

Die Hülse 8 ist an ihren Enden 9 und 10 durch einen Ziehvorgang auf an die Kabel 11 und 12 angepaßte Durchmesser und auf eine zum Quetschen geeignete Wandstärke gebracht worden. Im stabilen Mittelbereich der Hülse befindet sich der die Lichtwellenleiterspleiße 13 aufnehmende Hohlraum 14.

Die Hülse kann z.B. aus Metall (Kupfer, Messing o.ä.)
oder einem Kunststoff hergestellt sein, der durch Wärmeeinwirkung sich auf die Kabelenden aufpressen läßt.

AEG-TELEFUNKEN Nachrichtentechnik GmbH     PTL-BK/Th/ma
Gerberstr. 33                              BK 81/139
D-7150 Backnang


<u>Patentansprüche</u>

1. Hülse zur Aufnahme der Spleißstelle(n) zweier Lichtwellenleiterkabel, wobei die Hülse auf den beiden Kabelenden aufgequetscht ist, <u>dadurch gekennzeichnet,</u> daß
   der die Spleißstelle(n) (5, 13) aufnehmende Hohlraum
   (4, 14) der Hülse (1, 8) an den quetschbaren Hülsenenden (6, 7, 9, 10) auf Innendurchmesser übergeht, die
   an die jeweiligen Kabeldurchmesser angepaßt sind.


2. Hülse nach Anspruch 1, <u>dadurch gekennzeichnet,</u> daß die
   Wandstärke der Hülse (1, 8) an den Enden (6, 7, 9, 10)
   gegenüber dem stabilen Mittelteil verringert ist.

0082960

FIG.1

FIG.2